# EUROPEAN PATENT APPLICATION

(11) **EP 4 734 245 A1**
(43) Date of publication of application: **29.04.2026**
(21) Application number: 24851047.1
(22) Date of filing: 07.08.2024
(51) Int. Cl.: H01M 50/152

(54) **ONE-WAY VALVE, END COVER ASSEMBLY, BATTERY CELL, BATTERY AND ELECTRIC DEVICE**

(30) Priority: 07.08.2023 CN 202322110478 U; 28.03.2024 CN 202410370894
(71) Applicant: Contemporary Amperex Technology Co., Limited, Ningde, Fujian 352100 (CN)
(72) Inventor: RUAN, Guanghui, Ningde, Fujian 352100 (CN); TANG, Minghao, Ningde, Fujian 352100 (CN); HUANG, Caixia, Ningde, Fujian 352100 (CN)
(74) Representative: Kraus & Lederer PartGmbB
(86) International application number: PCT/CN2024/110416
(87) International publication number: WO 2025/031402

(57) **Abstract**

The present application relates to a check valve, an end cover assembly, a battery cell, a battery, and an electric apparatus. The check valve includes a valve core and a valve body. The valve body is assembled in a liquid injection hole and includes a fixing portion and a sealing portion. The fixing portion is connected to an end cover. The sealing portion is connected to the fixing portion and configured to be in sealing engagement with the end cover. The valve core is at least partially fitted within the valve body and defines, with the valve body, a flow passage for communication with an external environment. The valve core is configured to drive, under an external force, the sealing portion to deform and separate from the end cover to form a flow port, the flow port being in communication with the flow passage. The end cover assembly, battery cell, battery, and electric apparatus provided in the present application have good waterproofing and high liquid injection efficiency.

## Description

### RELATED APPLICATIONS

The present application claims the priority of Chinese Patent Application No. 2023221104787, filed on August 7, 2023 and entitled "END COVER ASSEMBLY, BATTERY CELL, BATTERY, AND ELECTRIC APPARATUS", which is incorporated herein by reference in its entirety.

The present application claims the priority of Chinese Patent Application No. 2024103708947, filed on March 28, 2024 and entitled "CHECK VALVE, END COVER ASSEMBLY, BATTERY CELL, BATTERY, AND ELECTRIC APPARATUS", which is incorporated herein by reference in its entirety.

### TECHNICAL FIELD

The present application relates to the field of battery technology, and more particularly, to a check valve, an end cover assembly, a battery cell, a battery, and an electric apparatus.

### BACKGROUND

Energy conservation and emission reduction are key to the sustainable development of the automotive industry. Electric vehicles, due to their energy-saving and environmentally friendly advantages, have become an important part of the sustainable development of the automotive industry. For electric vehicles, battery technology is a critical factor in their development.

A battery includes a battery cell, and during the manufacturing of the battery cell, processes such as exhaust and liquid injection are sequentially performed. During the transition from the exhaust process to the liquid injection process, the liquid injection hole on the end cover of the battery cell remains open, leading to a series of issues such as poor waterproofing and low liquid injection efficiency of the battery cell, which significantly limit the production capacity of the battery.

### SUMMARY

In view of the above problems, the present application provides a check valve, an end cover assembly, a battery cell, a battery, and an electric apparatus, which can alleviate the issues of poor waterproofing and low liquid injection efficiency in battery cell manufacturing, thereby improving the production capacity of the end cover assembly, battery cell, battery, and electric apparatus.

According to a first aspect, the present application provides a check valve, where the check valve includes: a valve core and a valve body; and the valve body is assembled in a liquid injection hole and includes a fixing portion and a sealing portion, the fixing portion being connected to an end cover, the sealing portion being connected to the fixing portion and in sealing engagement with the end cover, and the valve core being at least partially fitted within the valve body and defining, with the valve body, a flow passage for communication with an external environment; where
the valve core is capable of driving, under an external force, the sealing portion to deform and separate from the end cover and form a flow port, where the flow port is in communication with the flow passage.

In the present application, when the valve core is not subjected to an external force, the sealing portion is in sealing engagement with the end cover and blocks the flow passage from an internal environment of a battery cell. In this way, no medium exchange can occur between the external environment and the internal environment of the battery cell, meaning neither exhaust nor liquid injection can take place, and the internal environment of the battery cell is minimally affected by the external environment, providing good waterproofing. Consequently, there is no need to evacuate the battery cell during the subsequent liquid injection process, resulting in high liquid injection efficiency. When the valve core is subjected to an external force, the sealing portion separates from the end cover and forms a flow port, the flow port being in communication with the flow passage. Therefore, water vapor formed by the evaporation of moisture within an electrode assembly can be discharged to the external environment through the flow port and the flow passage to achieve exhaust. Additionally, an electrolyte can flow into the internal environment of the battery cell through the flow passage and the flow port to achieve liquid injection. Thus, by providing the check valve at the liquid injection hole of the end cover, the impact of the external environment on the internal environment of the battery cell during the battery production process can be effectively reduced, improving the waterproofing effect and liquid injection efficiency of the battery cell.

In some embodiments, the valve core is connected to the sealing portion and is capable of driving, under an external force, the sealing portion to stretch along a thickness direction of the end cover to separate from the end cover and form the flow port.

By configuring the valve core to be connected to the sealing portion and to drive the sealing portion to stretch along the thickness direction of the end cover under an external force to separate from the end cover and form the flow port, a simple operation is achieved, which facilitates simplification of the structure of the check valve, significantly reducing the manufacturing cost of the check valve. When the external force is removed, the sealing portion recovers its deformation, and the sealing portion re-establishes sealing engagement with the end cover. During this process, residual electrolyte in the valve core flows into the internal environment of the battery cell through the flow passage, helping to reduce the impact of electrolyte crystallization or moisture absorption within the valve core on the performance of the battery cell.

In some embodiments, the sealing portion and the fixing portion are both elastic structures and are integrally formed.

Designing the sealing portion and the fixing portion as elastic components and integrally formed facilitates simplification of the structure of the valve body, significantly reducing the manufacturing cost of the check valve.

In some embodiments, the sealing portion includes a connecting section and a sealing section, the connecting section being connected between the fixing portion and the sealing section; and
the fixing portion and the sealing section are both in sealing engagement with the end cover.

When the fixing portion and the sealing section are both in sealing engagement with the end cover, the sealing performance between the check valve and the end cover is improved, significantly reducing the possibility of medium exchange between the external environment and the internal environment of the battery cell. The internal environment of the battery cell is minimally affected by the external environment, providing good waterproofing, high liquid injection efficiency, and low risk of electrolyte leakage.

In some embodiments, surfaces of the fixing portion, the connecting section, and the sealing section facing away from the valve core enclose a bayonet, the end cover being clamped within the bayonet.

By providing the bayonet, the assembly between the end cover and the valve body is convenient and tightly fitted, contributing to improved sealing performance between the valve body and the end cover.

In some embodiments, the valve core and the valve body define a plurality of flow passages, and openings of the flow passages, which communicate with the flow port, are circumferentially spaced along the valve body.

The provision of multiple flow passages enables the battery cell to be subjected to exhaust or liquid injection quickly, further improving production efficiency.

In some embodiments, the valve body is provided with a valve cavity therein, the valve body being provided with a valve port and a guide port both in communication with the valve cavity; and the valve core is at least partially disposed within the valve cavity and encloses, with a cavity wall of the valve cavity, a flow cavity; where the valve port, the flow cavity, and the guide port are sequentially in communication to form the flow passage.

In such embodiments, the valve port, the flow cavity, and the guide port are always in communication to form the flow passage. When the valve core, under an external force, drives the sealing portion to deform and separate from the end cover and form the flow port, the flow passage is directly in communication with the flow port, facilitating subsequent exhaust and liquid injection.

In some embodiments, the valve body is provided with a valve cavity therein, the valve body being provided with a valve port and a guide port both in communication with the valve cavity; and the valve core is at least partially disposed within the valve cavity and the valve core is provided with a flow path structure therein, the flow path structure forming the flow passage when in communication with the guide port.

In such a design, when the valve core is not subjected to an external force, the flow path structure and the guide port are not in communication, so that no flow passage is formed, and the check valve itself has high sealing performance, with excellent sealing properties.

In some embodiments, the valve core is provided with a valve core cavity therein, and the valve core is provided with a flow path port and a valve core port both in communication with the valve core cavity; where the valve core port, the valve core cavity, and the flow path port are sequentially in communication and are arranged to form the flow path structure.

In such embodiments, the valve core is independently provided with a flow path structure, and only a guide port needs to be provided on the valve body to allow the flow path structure to form the flow passage when in communication with the guide port. This configuration facilitates simplification of the structure of the valve body and the valve core, reducing the manufacturing cost of the check valve.

In some embodiments, the valve core includes a first valve core segment, a second valve core segment, and a third valve core segment, the second valve core segment being connected between the first valve core segment and the third valve core segment; and
the second valve core segment includes at least two segments intersecting within the valve core cavity to divide the valve core cavity into a plurality of valve core sub-cavities, the valve core port and the valve core sub-cavities being in communication to form the flow path structure.

Designing the second valve core segment to divide the valve core cavity into multiple valve core sub-cavities is simple and easy to implement, facilitating the formation of the flow path structure.

In some embodiments, the valve core includes a first valve core segment, a second valve core segment, and a third valve core segment, the second valve core segment being connected between the first valve core segment and the third valve core segment; and
the second valve core segment includes at least two segments circumferentially spaced around the valve core.

This design facilitates simplification of the valve core structure, reducing the manufacturing cost of the check valve.

In some embodiments, an outer surface of the valve core includes a pressing surface, the pressing surface abutting at least a portion of an inner wall of the fixing portion and the pressing surface being configured to increase an abutting force on the inner wall of the fixing portion when moving along a driving direction of the valve core for driving the sealing portion. By such a design, the structure of the pressing surface of the valve core is optimized. During the valve opening process, the abutting force of the pressing surface on the fixing portion gradually increases, causing the fixing portion to deform in a direction away from its interior, offsetting or partially offsetting the inward collapse deformation, thereby enhancing the overall structural stability of the check valve.

In some embodiments, the valve core has a reference line therein extending along a thickness direction of the end cover, a distance between the pressing surface and the reference line gradually increasing in a direction opposite to the driving direction. By such a design, configuring the distance between the pressing surface and the reference line to gradually increase results in a gradually increasing outward pressing force on the fixing portion, making the connection between the fixing portion and the end cover tighter, further enhancing structural stability.

In some embodiments, the inner wall of the fixing portion is provided with an abutting protrusion, the abutting protrusion abutting the pressing surface. By such a design, introducing the abutting protrusion facilitates the abutment between the valve core and the fixing portion. In addition, adding the abutting protrusion also helps enhance structural strength, further enhancing structural stability.

In some embodiments, the abutting protrusion is annularly disposed around an outer periphery of the valve core. By such a design, configuring the abutting protrusion as an annular structure makes the abutment between the abutting protrusion and the pressing surface more uniform, thereby making the structure of the valve body more stable during the valve opening process.

In some embodiments, the abutting protrusion is located at an end of the inner wall of the fixing portion away from the sealing portion. By such a design, it is easier for the abutting protrusion to be subjected to a force and abut the end cover, allowing the fixing portion to better abut the end cover, thereby enhancing structural stability.

In some embodiments, a side of the abutting protrusion facing the valve core includes an abutting surface, the abutting surface being configured as an arcuate curved surface protruding toward the valve core. By such a design, it facilitates the transfer of the abutting force, reduces the likelihood of the fixing portion collapsing inward, and also reduces the frictional movement of the pressing surface on the abutting surface, minimizing wear on the pressing surface.

According to a second aspect, the present application provides an end cover assembly, where the end cover assembly includes: an end cover and the check valve, the end cover being provided with a liquid injection hole penetrating along a thickness direction thereof; and the valve body is assembled in the liquid injection hole.

According to a third aspect, the present application provides an end cover assembly, where the end cover assembly includes:
an end cover provided with a liquid injection hole penetrating along a thickness direction thereof; and
a valve body assembled in the liquid injection hole and including a fixing portion and a sealing portion, the fixing portion being connected to the end cover, the sealing portion being connected to the fixing portion and in sealing engagement with the end cover, and the valve body being configured to define, with a valve core, a flow passage for communication with an external environment; where
the sealing portion is configured to deform under an external force and separate from the end cover to form a flow port, the flow port being in communication with the flow passage.

By such a design, providing the check valve at the liquid injection hole of the end cover can effectively reduce the impact of the external environment on the internal environment of the battery cell during the battery production process, improving the waterproofing effect and liquid injection efficiency of the battery cell.

According to a fourth aspect, the present application provides a battery cell, including:
a casing having an opening at one end; and
the end cover assembly according to any one of the above embodiments, the end cover being disposed to cover the opening of the casing and the flow port being in communication between the flow passage and an interior of the casing.

According to a fifth aspect, the present application provides a battery including the battery cell according to any one of the above embodiments.

According to a sixth aspect, the present application provides an electric apparatus including the battery according to any one of the above embodiments, the battery being configured to provide electrical energy to the electric apparatus.

The above description is only an overview of the technical solutions of the present application. To provide a clearer understanding of the technical means of the present application, the solutions may be implemented in accordance with the content of the specification, and to make the above and other objectives, features, and advantages of the present application more apparent and understandable, specific embodiments of the present application are provided below.

### BRIEF DESCRIPTION OF DRAWINGS

To more clearly illustrate the technical solutions in the embodiments of the present application or in the prior art, the drawings required for the description of the embodiments or the prior art are briefly introduced below. It is apparent that the drawings described below are merely embodiments of the present application, and those of ordinary skill in the art can obtain other drawings based on the disclosed drawings without creative efforts.
FIG. 1 is a schematic structural diagram of a vehicle according to some embodiments of the present application.
FIG. 2 is an exploded view of a battery according to some embodiments of the present application.
FIG. 3 is a schematic structural diagram of a battery cell according to some embodiments of the present application.
FIG. 4 is a schematic structural diagram of an end cover assembly according to some embodiments of the present application.
FIG. 5 is a schematic structural diagram of an end cover assembly according to some other embodiments of the present application.
FIG. 6 is a cross-sectional view of the end cover assembly shown in FIG. 4 along an A-A direction.
FIG. 7 is a cross-sectional view of the end cover assembly shown in FIG. 5 along a B-B direction.
FIG. 8 is a schematic structural diagram of a check valve in an end cover assembly according to further some other embodiments of the present application.
FIG. 9 is a cross-sectional view of the check valve shown in FIG. 8 along a C-C direction.
FIG. 10 is a top view of the check valve shown in FIG. 8.
FIG. 11 is a schematic structural diagram of the check valve in the end cover assembly shown in FIG. 4.
FIG. 12 is an exploded view of the check valve shown in FIG. 11.
FIG. 13 is a schematic structural diagram of the valve core of the check valve shown in FIG. 12.
FIG. 14 is an exploded view of the check valve in the end cover assembly shown in FIG. 5.
FIG. 15 is a schematic structural diagram of the check valve shown in FIG. 14.
FIG. 16 is a schematic structural diagram of a check valve in an end cover assembly according to still some other embodiments of the present application.
FIG. 17 is a cross-sectional view of the check valve shown in FIG. 16.

### Description of reference signs:

10000, vehicle; 1000, battery; 2000, controller; 3000, motor; 100, battery cell; 200, housing; 10, end cover assembly; 20, casing; 30, electrode assembly; 11, end cover; 111, liquid injection hole; 112, inner end face; 113, outer end face; 12, check valve; 121, valve core; 1211, valve core port; 1212, flow path port; 1213, valve core cavity; 1213a, valve core sub-cavity; 1214, flow path structure; 1215, first valve core segment; 1216, second valve core segment; 1217, third valve core segment; 1218, valve core body; 1219, valve core branch; 12a, pressing surface; 12b, reference line; 12c, abutting protrusion; 12d, abutting surface; 122, valve body; 1221, fixing portion; 12211, first sealing area; 12212, second sealing area; 1222, sealing portion; 12221, connecting section; 12222, sealing section; 1223, valve port; 1224, guide port; 1225, valve cavity; 1226, flow cavity; 1227, flow sub-cavity; 123, bayonet; 201, first part; 202, second part; X, thickness direction; and L, distance.

### DESCRIPTION OF EMBODIMENTS

The technical solutions in the embodiments of the present application will be clearly and completely described below in conjunction with the drawings in the embodiments of the present application. It is apparent that the described embodiments are only a part of the embodiments of the present application, and not all of the embodiments. Based on the embodiments in the present application, all other embodiments obtained by those of ordinary skill in the art without creative efforts fall within the protection scope of the present application.

To make the above objectives, features, and advantages of the present application more apparent and understandable, the specific embodiments of the present application are described in detail below in conjunction with the drawings. Many specific details are set forth in the following description to facilitate a full understanding of the present application. However, the present application can be implemented in many ways other than those described herein, and those skilled in the art can make similar improvements without departing from the spirit of the present application. Therefore, the present application is not limited by the specific embodiments disclosed below.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings, and are used only for convenience in describing the present application and simplifying the description, rather than indicating or implying that the referenced device or element must have a particular orientation, be constructed, and operate in a particular orientation, and thus should not be construed as limiting the present application.

In addition, the terms "first" and "second" are used for descriptive purposes only and should not be construed as indicating or implying relative importance or implicitly indicating the number of technical features indicated. Thus, a feature defined with "first" or "second" may explicitly or implicitly include at least one such feature. In the description of the present application, "plurality" means at least two, such as two, three, and the like, unless explicitly specified otherwise.

In the present application, unless otherwise expressly specified and limited, terms such as "mounted", "connected", "coupled", and "fixed" should be understood in a broad sense, for example, as fixed connections, detachable connections, or integral connections; mechanical connections or electrical connections; direct connections or indirect connections through an intermediary; or internal communication between two elements or interaction relationships between two elements, unless explicitly specified otherwise. Those of ordinary skill in the art can understand the specific meanings of the above terms in the present application based on specific circumstances.

In the present application, unless otherwise expressly specified and limited, a first feature being "on" or "below" a second feature may mean that the first and second features are in direct contact or in indirect contact through an intermediary. Moreover, a first feature being "above", "over", or "on top of" a second feature may mean that the first feature is directly above or obliquely above the second feature, or simply that the first feature is at a higher level than the second feature. A first feature being "below", "under", or "beneath" a second feature may mean that the first feature is directly below or obliquely below the second feature, or simply that the first feature is at a lower level than the second feature.

It should be noted that when an element is referred to as being "fixed to" or "disposed on" another element, it may be directly on the other element or there may be an intervening element. When an element is considered to be "connected" to another element, it may be directly connected to the other element or there may be an intervening element. The terms "vertical", "horizontal", "upper", "lower", "left", "right", and similar expressions used herein are for illustrative purposes only and do not represent the only embodiments.

Currently, from the perspective of market development, the application of batteries is becoming increasingly widespread. Batteries are not only used in energy storage power systems such as hydropower, thermal power, wind power, and solar power plants, but are also widely applied in electric vehicles such as electric bicycles, electric motorcycles, and electric cars, as well as in military equipment, aerospace, and other fields. As the application areas of batteries continue to expand, the market demand for batteries is also continuously increasing.

A battery includes a battery cell, and during the manufacturing of the battery cell, processes such as exhaust and liquid injection are sequentially performed. During the transition from the exhaust process to the liquid injection process, the liquid injection hole on the end cover of the battery cell remains open, leading to a series of issues such as poor waterproofing and low liquid injection efficiency of the battery cell, which significantly limit the production capacity of the battery.

In some examples, since the electrolyte cannot come into contact with water, before the battery cell is transported to the liquid injection station for liquid injection (injecting the electrolyte), the battery cell should first undergo exhaust at the exhaust station. Exhaust refers to baking the battery cell in a high-temperature and vacuum environment to allow moisture within the electrode assembly contained in the internal environment of the battery cell to evaporate and be discharged to the outside of the battery cell through the liquid injection hole on the end cover of the battery cell. Throughout the exhaust process, the liquid injection hole remains open, enhancing the reliability of the exhaust. After the exhaust process is completed, the battery cell is transported from the exhaust station to the liquid injection station. During this process, the liquid injection hole remains open, resulting in poor waterproofing of the battery cell, as water vapor from the environment can easily enter the battery cell through the liquid injection hole, affecting the normal use of the subsequently injected electrolyte. Therefore, when the battery cell is transported to the liquid injection station, it is necessary to re-evacuate the interior of the battery cell before performing the liquid injection operation. Evacuation takes a considerable amount of time, significantly extending the duration the battery cell remains at the liquid injection station, thereby reducing liquid injection efficiency.

To alleviate the issues of poor waterproofing and low liquid injection efficiency caused by the open liquid injection hole of the battery cell, the present application provides a check valve configured to seal or open the liquid injection hole on the end cover. The check valve includes a valve core and a valve body, the valve body being assembled in the liquid injection hole and having a sealing portion, the valve core being at least partially fitted within the valve body and defining, with the valve body, a flow passage for communication with an external environment.

When the valve core is not subjected to an external force, the sealing portion is in sealing engagement with the end cover to block communication between the flow passage and the internal environment of the battery cell. In this way, no medium exchange can occur between the external environment and the internal environment of the battery cell, the accommodation cavity is minimally affected by the external environment, providing good waterproofing, and there is no need to evacuate the internal environment of the battery cell during the subsequent liquid injection process, resulting in high liquid injection efficiency. When the valve core is subjected to an external force and drives the sealing portion to deform, the sealing portion separates from the end cover and forms a flow port, the flow port being in communication with the flow passage. Therefore, water vapor formed by the evaporation of moisture within the electrode assembly can be discharged to the external environment through the flow port and the flow passage, and the electrolyte can flow into the internal environment of the battery cell through the flow passage and the flow port to achieve liquid injection.

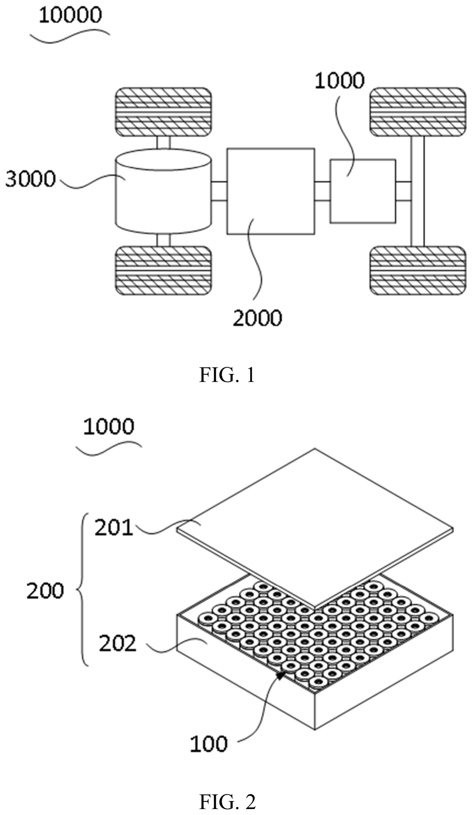

Referring to FIG. 1, FIG. 1 is a schematic structural diagram of a vehicle 10000 according to some embodiments of the present application.

The embodiments of the present application provide an electric apparatus using a battery 1000 as a power source, where the electric apparatus may include, but is not limited to, a mobile phone, a tablet, a laptop, an electric toy, an electric tool, an electric bicycle, an electric vehicle, a ship, a spacecraft, and the like. The electric toy may include fixed or mobile electric toys, such as game consoles, electric car toys, electric ship toys, electric airplane toys, and the like, and the spacecraft may include airplanes, rockets, space shuttles, spaceships, and the like.

It should be understood that the technical solutions described in the embodiments of the present application are not limited to the electric apparatus described above, but for brevity of description, the following embodiments are described using a vehicle 10000 as an example of the electric apparatus.

The vehicle 10000 may be a fuel vehicle, a gas vehicle, or a new energy vehicle, where the new energy vehicle may be a pure electric vehicle, a hybrid vehicle, or an extended-range vehicle, and the like. A battery 1000 is disposed inside the vehicle 10000, and the battery 1000 may be disposed at the bottom, front, or rear of the vehicle 10000. The battery 1000 may be used to supply power to the vehicle 10000, for example, the battery 1000 may serve as an operational power source for the vehicle 10000. The vehicle 10000 may further include a controller 2000 and a motor 3000, where the controller 2000 is configured to control the battery 1000 to supply power to the motor 3000, for example, for the operational power requirements during the start, navigation, and driving of the vehicle 10000.

In some embodiments of the present application, the battery 1000 may not only serve as an operational power source for the vehicle 10000 but also as a driving power source for the vehicle 10000, replacing or partially replacing fuel or natural gas to provide driving power for the vehicle 10000.

Referring to FIG. 2, FIG. 2 is an exploded view of a battery 1000 according to some embodiments of the present application.

The battery 1000 includes a housing 200 and a battery cell 100, the battery cell 100 being accommodated within the housing 200. The housing 200 is configured to provide an accommodation cavity for the battery cell 100, and the housing 200 may adopt various structures. In some embodiments, the housing 200 may include a first part 201 and a second part 202, where the first part 201 and the second part 202 are mutually covered, and the first part 201 and the second part 202 together define an accommodation cavity for accommodating the battery cell 100. The second part 202 may be a hollow structure with an opening at one end, and the first part 201 may be a plate-like structure, where the first part 201 covers the opening side of the second part 202 to form the accommodation cavity together with the second part 202; alternatively, both the first part 201 and the second part 202 may be hollow structures with an opening on one side, where the opening side of the first part 201 covers the opening side of the second part 202. Certainly, the housing 200 formed by the first part 201 and the second part 202 may have various shapes, such as a cylinder, a cuboid, and the like.

In the battery 1000, there may be a plurality of battery cells 100, and the plurality of battery cells 100 may be connected in series, in parallel, or in a mixed connection, where a mixed connection refers to a combination of series and parallel connections among the plurality of battery cells 100. The plurality of battery cells 100 may be directly connected in series, in parallel, or in a mixed connection, and the entirety formed by the plurality of battery cells 100 is accommodated within the housing 200; alternatively, the battery 1000 may include a plurality of battery cells 100 first connected in series, in parallel, or in a mixed connection to form a battery module, and a plurality of battery modules are then connected in series, in parallel, or in a mixed connection to form an entirety accommodated within the housing 200. The battery 1000 may further include other structures, for example, the battery 1000 may include a busbar component for achieving electrical connections between the plurality of battery cells 100.

Each battery cell 100 may be a secondary battery or a primary battery; it may also be a lithium-sulfur battery, a sodium-ion battery, or a magnesium-ion battery, but is not limited thereto.

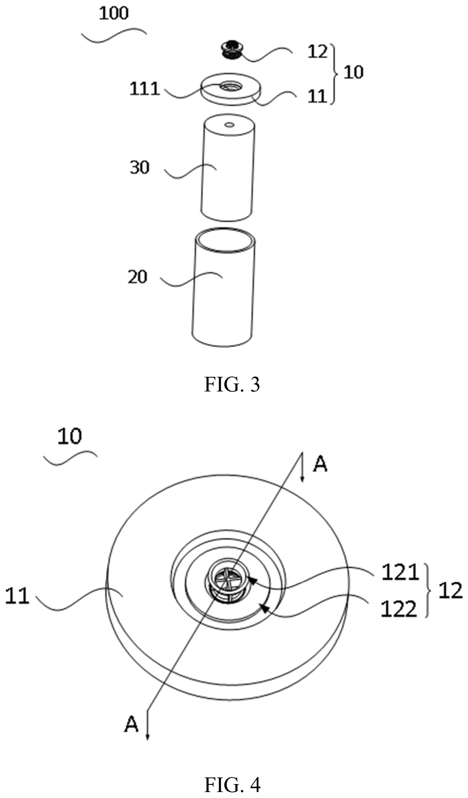

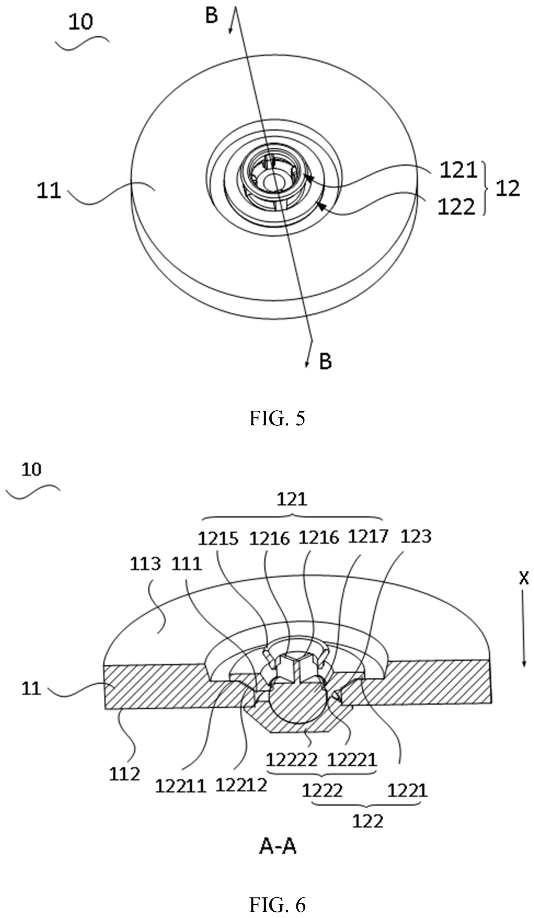

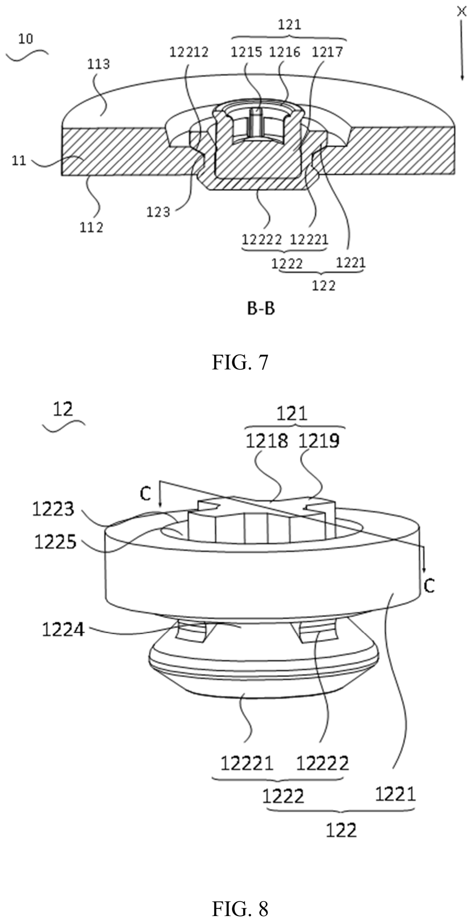

Referring to FIG. 3, FIG. 4, FIG. 5, FIG. 6, and FIG. 7, FIG. 3 is a schematic structural diagram of a battery cell 100 according to some embodiments of the present application, FIG. 4 is a schematic structural diagram of an end cover assembly 10 according to some embodiments of the present application, FIG. 5 is a schematic structural diagram of an end cover assembly 10 according to some other embodiments of the present application, FIG. 6 is a cross-sectional view of the end cover assembly 10 shown in FIG. 4 along an A-A direction, and FIG. 7 is a cross-sectional view of the end cover assembly 10 shown in FIG. 5 along a B-B direction.

The battery cell 100 refers to the smallest unit constituting the battery 1000. The battery cell 100 includes an electrode assembly 30, a casing 20, and an end cover assembly 10.

The electrode assembly 30 is a component in the battery cell 100 where electrochemical reactions occur. The battery cell 100 may contain one or more electrode assemblies 30. The electrode assembly 30 is mainly formed by winding or stacking a positive electrode plate and a negative electrode plate, with a separator typically disposed between the positive electrode plate and the negative electrode plate. The portions of the positive electrode plate and the negative electrode plate with active materials constitute the main body of the electrode assembly 30, while the portions of the positive electrode plate and the negative electrode plate without active materials each constitute a tab (not shown in the figures). The positive tab and the negative tab may be located together at one end of the main body or separately at both ends of the main body. During the charging and discharging process of the battery 1000, the positive active material and the negative active material react with the electrolyte, and the tabs are connected to electrode terminals to form a current loop.

The casing 20 is a component configured to cooperate with the end cover 11 in the end cover assembly 10 to form the internal environment of the battery cell 100, where the formed internal environment can accommodate the electrode assembly 30, the electrolyte (not shown in the figures), and other components. The casing 20 and the end cover 11 may be independent components, with an opening provided on the casing 20, and the end cover 11 covers the opening to form the internal environment of the battery cell 100. Without limitation, the end cover 11 and the casing 20 may also be integrated; in some examples, the end cover 11 and the casing 20 may form a common connection surface before other components are inserted into the housing, and when the interior of the casing 20 needs to be encapsulated, the end cover 11 is made to cover the casing 20. The casing 20 may have various shapes and sizes, such as a cuboid, a cylinder, a hexagonal prism, and the like. In some examples, the shape of the casing 20 may be determined based on the specific shape and size of the electrode assembly 30. The material of the casing 20 may be various, such as copper, iron, aluminum, stainless steel, aluminum alloy, plastic, and the like, and the embodiments of the present application do not impose specific restrictions on this.

The end cover assembly 10 includes an end cover 11, where the end cover 11 refers to a component that covers the opening of the casing 20 to isolate the internal environment of the battery cell 100 from the external environment. Without limitation, the shape of the end cover 11 may be adapted to the shape of the casing 20 to fit with the casing 20. For example, the end cover 11 may be made of a material with certain hardness and strength (for example, aluminum alloy), so that the end cover 11 is less likely to deform when subjected to compression or collision, enabling the battery cell 100 to have higher structural strength and improved safety performance. The end cover 11 may be provided with functional components such as electrode terminals. The electrode terminals may be configured to electrically connect with the electrode assembly 30 to output or input electrical energy of the battery cell 100. In some embodiments, the end cover 11 may also be provided with a pressure relief mechanism for releasing internal pressure when the internal pressure or temperature of the battery cell 100 reaches a threshold. In some embodiments, an insulating member may also be provided on the inner side of the end cover 11, where the insulating member may be configured to isolate the electrical connection components within the casing 20 from the end cover 11 to reduce the risk of short circuits. For example, the insulating member may be plastic, rubber, and the like.

Referring again to FIG. 4 to FIG. 7, according to a first aspect, according to one or more embodiments of the present application, the present application provides a check valve 12. The check valve 12 includes a valve core 121 and a valve body 122; the valve body 122 is assembled in a liquid injection hole 111 and includes a fixing portion 1221 and a sealing portion 1222. The fixing portion 1221 is connected to the end cover 11, the sealing portion 1222 is connected to the fixing portion 1221 and is in sealing engagement with the end cover 11, and the valve core 121 is at least partially fitted within the valve body 122 and defines, with the valve body 122, a flow passage for communication with an external environment; where the valve core 121 is capable of driving, under an external force, the sealing portion 1222 to deform and separate from the end cover 11 and form a flow port, where the flow port is in communication with the flow passage.

Referring to FIG. 3 and FIG. 8 together, FIG. 8 is a schematic structural diagram of a check valve 12 of an end cover assembly 10 in a third embodiment of the present application.

It is worth mentioning that the internal environment of the battery cell 100 is defined and formed by the end cover 11 and the casing 20 together, and the liquid injection hole 111 of the end cover 11 is formed by the end cover 11 itself. The liquid injection hole 111 and the internal environment of the battery cell 100 are neither identical nor equivalent. The end cover 11 has an outer end face 113 and an inner end face 112 oppositely disposed along its thickness direction X, where the inner end face 112 and the inner wall of the casing 20 define the internal environment of the battery cell 100, the outer end face 113 is disposed facing away from the internal environment of the battery cell 100, and the liquid injection hole 111 on the end cover 11 sequentially penetrates the outer end face 113 and the inner end face 112.

The valve body 122 and the valve core 121 may be separately formed or integrally formed. In some embodiments, as shown in FIG. 6 and FIG. 7, the valve body 122 and the valve core 121 are separately formed; as shown in FIG. 8, the valve body 122 and the valve core 121 are integrally formed.

Referring again to FIG. 6 to FIG. 8, the fixing portion 1221 is fixed to the end cover 11, and regardless of whether an external force is applied to the valve core 121, the position of the fixing portion 1221 relative to the end cover 11 remains unchanged. The fixing portion 1221 may be located within the liquid injection hole 111 and retained with the wall of the liquid injection hole 111; alternatively, the fixing portion 1221 may be located on the side of the end cover 11 facing away from the interior of the casing 20 and abut the outer end face 113 of the end cover 11.

The sealing portion 1222 is an elastic component, such as a rubber material, which, under the action of an external force, deforms by contracting, stretching, or the like to separate from the end cover 11 and form a flow port. When the external force is removed, the sealing portion 1222 automatically recovers its deformation and re-establishes sealing engagement with the end cover 11.

For example, the sealing portion 1222 may achieve sealing engagement with the end cover 11 by abutting the wall of the liquid injection hole 111; in such embodiments, the sealing portion 1222 separates from the wall of the liquid injection hole 111 to form the flow port; and/or, the sealing portion 1222 may be accommodated in the internal environment of the battery cell 100 and abut the inner end face 112 of the end cover 11 to achieve sealing engagement with the end cover 11; in such embodiments, the sealing portion 1222 separates from the inner end face 112 of the end cover 11 to form the flow port.

During actual production, the check valve 12, the end cover 11, the casing 20, and the electrode assembly 30 are pre-assembled to form the battery cell 100. During exhaust, the battery cell 100 is placed at the exhaust station in a high-temperature and vacuum environment, and a porous plate is configured to press the valve core 121. The opening of the flow passage away from the flow port communicates with the external environment through the pore structure of the porous plate. Under the gravity of the porous plate, the valve core 121 sinks and drives the sealing portion 1222 to deform and separate from the end cover 11 and form the flow port. In this way, moisture within the electrode assembly 30 evaporates due to heat and flows sequentially through the flow port, the flow passage, and the pore structure of the porous plate to be discharged to the external environment. After the exhaust is completed, the porous plate is lifted, and the action of the porous plate on the valve core 121 is removed. Since the sealing portion 1222 has deformed when separated from the end cover 11, when the action of the porous plate on the valve core 121 is removed, the sealing portion 1222 rebounds and re-establishes sealing engagement with the end cover 11. At this time, the flow port is closed again, isolating the external environment from the internal environment of the battery cell 100, greatly reducing the medium exchange between the external environment and the interior of the battery cell 100, so that the battery cell 100 can maintain a high degree of vacuum.

It should be understood that the medium refers to substances present in the external environment and/or the internal environment of the battery cell 100. Substances present in the external environment may include water vapor, air, and the like. Substances present in the internal environment of the battery cell 100 may include the electrolyte.

Subsequently, the battery cell 100 is transported to the liquid injection station for liquid injection. During the transportation of the battery cell 100 from the exhaust station to the liquid injection station, since the flow passage in the check valve 12 is always isolated from the internal environment of the battery cell 100, the battery cell 100 maintains a high degree of vacuum. Therefore, when the battery 1000 is transported to the liquid injection station, there is no need to re-evacuate the battery cell 100.

During liquid injection, the liquid injection rubber sleeve of the injection nozzle presses down on the valve core 121, causing the valve core 121 to sink again and drive the sealing portion 1222 to separate from the end cover 11 and form the flow port. In this way, the electrolyte flowing out from the injection nozzle flows into the battery cell 100 through the flow passage and the flow port. After the liquid injection is completed, the injection nozzle is removed. At this time, when the pressure applied by the injection nozzle on the valve core 121 disappears, the sealing portion 1222 re-establishes sealing engagement with the end cover 11, isolating the internal environment of the battery cell 100 from the external environment of the battery cell 100, so that the electrolyte can be sealed within the battery cell 100 for chemical reactions.

It is worth mentioning that, to reduce the risk of electrolyte leakage, during the liquid injection process, the liquid injection rubber sleeve of the injection nozzle should also seal the fixing portion 1221 to reduce the possibility of electrolyte overflowing from the gap between the liquid injection rubber sleeve of the injection nozzle and the fixing portion 1221.

It should be understood that, during exhaust, the gravity of the porous plate is the external force acting on the valve core 121, and during liquid injection, the pressure of the injection nozzle is the external force acting on the valve core 121.

It can be seen that, in the present application, when the valve core 121 is not subjected to an external force, the sealing portion 1222 is in sealing engagement with the end cover 11 and blocks the flow passage from the internal environment of the battery cell 100. In this way, no medium exchange can occur between the external environment and the internal environment of the battery cell 100, meaning neither exhaust nor liquid injection can take place, and the internal environment of the battery cell 100 is minimally affected by the external environment, providing good waterproofing. Consequently, there is no need to evacuate the battery cell 100 during the subsequent liquid injection process, resulting in high liquid injection efficiency. When the valve core 121 is subjected to an external force, the sealing portion 1222 separates from the end cover 11 and forms a flow port, the flow port being in communication with the flow passage. Therefore, water vapor formed by the evaporation of moisture within the electrode assembly 30 can be discharged to the external environment through the flow port and the flow passage to achieve exhaust. Additionally, the electrolyte can flow into the internal environment of the battery cell 100 through the flow passage and the flow port to achieve liquid injection.

Thus, by providing the check valve 12 at the liquid injection hole 111 of the end cover 11, the impact of the external environment on the internal environment of the battery cell 100 during the battery 1000 production process can be effectively reduced, improving the waterproofing effect and liquid injection efficiency of the battery cell 100.

Referring to FIG. 6 to FIG. 9, FIG. 9 is a cross-sectional view of a check valve 12 in a third embodiment of the present application along a C-C direction.

In one or more embodiments of the present application, the valve core 121 is connected to the sealing portion 1222 and is capable of driving, under an external force, the sealing portion 1222 to stretch along a thickness direction X of the end cover 11 to separate from the end cover 11 and form the flow port.

In some examples, at least the sealing portion 1222 is an elastic component. Under the action of an external force, the valve core 121 drives the sealing portion 1222 to stretch along the thickness direction X of the end cover 11, so that the portion of the sealing portion 1222 extending into the internal environment of the battery cell 100 increases. Consequently, the sealing portion 1222 separates from the inner end face 112 of the end cover 11 and/or the wall of the liquid injection hole 111 to form the flow port.

By configuring the valve core 121 to be connected to the sealing portion 1222 and to drive the sealing portion 1222 to stretch along the thickness direction X of the end cover 11 under an external force to separate from the end cover 11 and form a flow port, a simple operation is achieved, which facilitates simplification of the structure of the check valve 12, significantly reducing the manufacturing cost of the check valve 12. When the external force is removed, the sealing portion 1222 recovers its deformation, and the sealing portion 1222 re-establishes sealing engagement with the end cover 11. During this process, residual electrolyte in the valve core 121 flows into the internal environment of the battery cell 100 through the flow passage, helping to reduce the impact of electrolyte crystallization or moisture absorption within the valve core 121 on the performance of the battery cell 100.

Further, in one or more embodiments of the present application, the sealing portion 1222 and the fixing portion 1221 are both elastic structures and integrally formed.

In this way, the sealing portion 1222 and the fixing portion 1221 form an elastic valve body 122.

Designing the sealing portion 1222 and the fixing portion 1221 as elastic components and integrally formed facilitates simplification of the structure of the valve body 122, significantly reducing the manufacturing cost of the check valve 12.

In one or more embodiments of the present application, the sealing portion 1222 includes a connecting section 12221 and a sealing section 12222, the connecting section 12221 being connected between the fixing portion 1221 and the sealing section 12222; and the fixing portion 1221 and the sealing section 12222 are both in sealing engagement with the end cover 11.

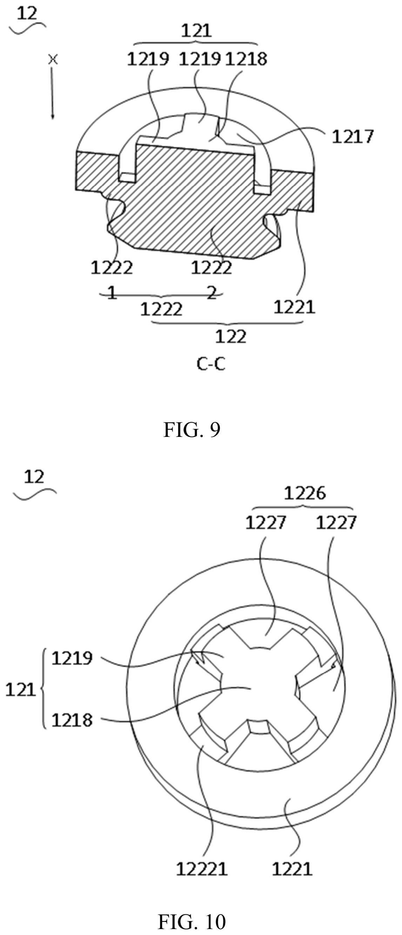

The sealing portion 1222 includes a connecting section 12221 and a sealing section 12222, the connecting section 12221 being located within the liquid injection hole 111 and connected between the fixing portion 1221 and the sealing section 12222, and the valve core 121 being connected to the sealing section 12222. In some embodiments, referring to FIG. 6, the sealing section 12222 is located outside the liquid injection hole 111 and accommodated within the internal environment of the battery 1000, and the sealing section 12222 abuts the inner end face 112 of the end cover 11 to achieve sealing engagement. In this embodiment, under an external force, the valve core 121 drives the connecting section 12221 to stretch, so that the sealing section 12222 can move relative to the end cover 11 along the thickness direction X of the end cover 11 and separate from the inner end face 112 of the end cover 11 to form a flow port. In some embodiments, referring to FIG. 7 and FIG. 9, the sealing section 12222 is at least partially located within the liquid injection hole 111 and abuts the wall of the liquid injection hole 111 to achieve sealing engagement. In this embodiment, under an external force, the valve core 121 drives the connecting section 12221 to stretch, so that the sealing section 12222 can move relative to the end cover 11 along the thickness direction X of the end cover 11 and separate from the wall of the liquid injection hole 111 to form a flow port.

In some examples, after the check valve 12 is assembled, the battery cell 100 is always in sealing engagement with the end cover 11, and the sealing section 12222 is configured to selectively engage in sealing with or disengage from the end cover 11. Additionally, it is worth mentioning that when the fixing portion 1221 and the sealing section 12222 are both in sealing engagement with the end cover 11, the valve core 121 and the fixing portion 1221 may be either in sealing engagement or spaced apart. For example, as shown in FIG. 6 and FIG. 7, when the fixing portion 1221 and the sealing section 12222 are both in sealing engagement with the end cover 11, the valve core 121 and the fixing portion 1221 are also in sealing engagement. Alternatively, when the fixing portion 1221 and the sealing section 12222 are both in sealing engagement with the end cover 11, the valve core 121 and the fixing portion 1221 are spaced apart.

Sealing between the fixing portion 1221 and the end cover 11 may be achieved through inclined surface sealing and/or planar surface sealing. Inclined surface sealing refers to the sealing surfaces between the fixing portion 1221 and the end cover 11 being inclined surfaces. An inclined surface refers to a surface structure inclined relative to the thickness direction X of the end cover 11. Planar surface sealing refers to the sealing surfaces between the fixing portion 1221 and the end cover 11 being planar surfaces. A planar surface refers to a surface structure perpendicular to the thickness direction X of the end cover 11. Similarly, sealing between the sealing section 12222 and the end cover 11 may also be achieved through inclined surface sealing and/or planar surface sealing.

In some embodiments, as shown in FIG. 6, the surface of the fixing portion 1221 facing the end cover 11 includes a first sealing area 12211 and a second sealing area 12212, the first sealing area 12211 being disposed around the periphery of the second sealing area 12212 and arranged and connected along the thickness direction X of the end cover 11. The first sealing area 12211 is an annular planar surface, the second sealing area 12212 is an annular inclined surface, the first sealing area 12211 is in planar surface sealing engagement with the outer end face 113 of the end cover 11, and the second sealing area 12212 is in inclined surface sealing engagement with the wall of the liquid injection hole 111. The sealing section 12222 is located within the accommodation cavity, and the surface of the sealing section 12222 facing the end cover 11 is in planar surface sealing engagement with the inner end face 112 of the end cover 11.

In this embodiment, during exhaust or liquid injection, the valve core 121 sinks and drives the sealing section 12222 to stretch the connecting section 12221, and the sealing section 12222 sinks and separates from the inner end face 112 of the end cover 11 to form a flow port. After exhaust or liquid injection is completed, the connecting section 12221 recovers its deformation, and the sealing section 12222 re-establishes planar surface sealing engagement with the inner end face 112 of the end cover 11.

In some embodiments, as shown in FIG. 7, the surface of the fixing portion 1221 facing the end cover 11 includes only the second sealing area 12212, and the second sealing area 12212 is in inclined surface sealing engagement with the wall of the liquid injection hole 111. As shown in FIG. 8, the sealing manner between the fixing portion 1221 and the end cover 11 in FIG. 8 is the same as that in FIG. 1, and thus is not repeated here.

In FIG. 7 and FIG. 8, the sealing section 12222 is in inclined surface sealing engagement with the wall of the liquid injection hole 111. During exhaust or liquid injection, the valve core 121 sinks and drives the sealing section 12222 to stretch the connecting section 12221, and the sealing section 12222 separates from the wall of the liquid injection hole 111 to form a flow port. After exhaust or liquid injection is completed, the connecting section 12221 recovers its deformation, and the sealing section 12222 re-establishes an inclined surface sealing engagement with the wall of the liquid injection hole 111.

When the fixing portion 1221 and the sealing section 12222 are both in sealing engagement with the end cover 11, the sealing performance between the check valve 12 and the end cover 11 is improved, significantly reducing the possibility of medium exchange between the external environment and the internal environment of the battery cell 100. The internal environment of the battery cell 100 is minimally affected by the external environment, providing good waterproofing, high liquid injection efficiency, and low risk of electrolyte leakage.

Referring again to FIG. 6 and FIG. 7, in one or more embodiments of the present application, surfaces of the fixing portion 1221, the connecting section 12221, and the sealing section 12222 facing away from the valve core 121 enclose a bayonet 123, the end cover 11 being clamped within the bayonet 123.

By providing the bayonet 123, the assembly between the end cover 11 and the valve body 122 is convenient and tightly fitted, contributing to improved sealing performance between the valve body 122 and the end cover 11.

In one or more embodiments of the present application, the valve core 121 and the valve body 122 define a plurality of flow passages, and openings of the flow passages, which communicate with the flow port, are circumferentially spaced along the valve body 122.

The flow passages may be independent of each other or may partially overlap, and specific limitations are not provided here.

The provision of multiple flow passages enables the battery cell 100 to be subjected to exhaust or liquid injection quickly, further improving production efficiency.

Referring again to FIG. 8, and referring to FIG. 9 and FIG. 10 together, FIG. 10 is a top view of a check valve in a third embodiment of the present application.

In one or more embodiments of the present application, the valve body 122 is provided with a valve cavity 1225 therein, the valve body 122 being provided with a valve port 1223 and a guide port 1224 both in communication with the valve cavity 1225; and the valve core 121 is at least partially disposed within the valve cavity 1225 and encloses, with a cavity wall of the valve cavity 1225, a flow cavity 1226; where the valve port 1223, the flow cavity 1226, and the guide port 1224 are sequentially in communication to form the flow passage.

In some examples, the valve core 121 may be partially located within the valve cavity 1225, with the remaining portion extending outside the valve port 1223, or the valve core 121 may be entirely located within the valve cavity 1225. To enhance the reliability of the driving of the valve core 121, the remaining portion of the valve core 121 extends outside the valve port 1223, so that during the exhaust process, the porous plate can drive the valve core 121 to sink relative to the valve body 122, and during the liquid injection process, the injection nozzle can also drive the valve core 121 to sink relative to the valve body 122.

The fixing portion 1221 is annular, and an end face of the fixing portion 1221 away from the sealing section 12222 is provided with the valve port 1223. The fixing portion 1221 and the sealing portion 1222 define the valve cavity 1225, and the guide port 1224 is disposed on the sealing portion 1222.

In some embodiments, the valve core 121 may include only a valve core body 1218, the valve core body 1218 being disposed within the valve cavity 1225, and the outer side wall of the valve core body 1218 and the cavity wall of the valve cavity 1225 define the flow cavity 1226. In some embodiments, the valve core 121 may further include a plurality of valve core branches 1219 in addition to the valve core body 1218, all valve core branches 1219 being circumferentially spaced along the valve core body 1218 and dividing the flow cavity 1226 into a plurality of flow sub-cavities 1227. Specifically, the valve core body 1218 and every two adjacent valve core branches 1219 together define one flow sub-cavity 1227.

The sealing portion 1222 includes a connecting section 12221 and a sealing section 12222. In some embodiments, the connecting section 12221 may be a continuous annular structure provided with one or more guide ports 1224 circumferentially spaced along the valve body 122. In some embodiments, the connecting section 12221 includes a plurality of segments circumferentially spaced along the valve body 122, with every two adjacent connecting sections 12221 defining a guide port 1224. Each connecting section 12221 may extend along the thickness direction X of the end cover 11 or along the radial direction of the liquid injection hole 111.

The number of guide ports 1224 may be one or more, specifically set as needed.

Taking the example where the flow cavity 1226 is not divided into flow sub-cavities 1227 and there is one guide port 1224, the valve port 1223, the flow cavity 1226, and the guide port 1224 are sequentially in communication to form the flow passage. In this embodiment, the check valve 12 has only one flow passage.

Taking the example where the flow cavity 1226 is not divided into flow sub-cavities 1227 and there are multiple guide ports 1224 circumferentially spaced along the valve body 122, the valve port 1223, the flow cavity 1226, and each guide port 1224 are sequentially in communication to form a flow passage. In this embodiment, the check valve 12 has multiple flow passages, and all flow passages share the valve port 1223 and the flow cavity 1226.

Taking the example where the flow cavity 1226 is divided into flow sub-cavities 1227 and there is one guide port 1224 extending circumferentially along the valve body 122, the valve port 1223, each flow sub-cavity 1227, and the guide port 1224 are sequentially in communication to form a flow passage. In this embodiment, the check valve 12 has multiple flow passages, and all flow passages share the valve port 1223 and the guide port 1224.

Taking the example where the flow cavity 1226 is divided into flow sub-cavities 1227 and the flow sub-cavities 1227 correspond one-to-one with the guide ports 1224, the valve port 1223, a flow sub-cavity 1227, and a guide port 1224 corresponding to the flow sub-cavity 1227 are sequentially in communication to form a flow passage. In this embodiment, the check valve 12 has multiple flow passages, and all flow passages share only the valve port 1223.

In such embodiments, the valve port 1223, the flow cavity 1226, and the guide port 1224 are always in communication to form the flow passage. When the valve core 121, under an external force, drives the sealing portion 1222 to deform and separate from the end cover 11 and form the flow port, the flow passage is directly in communication with the flow port, facilitating subsequent exhaust and liquid injection.

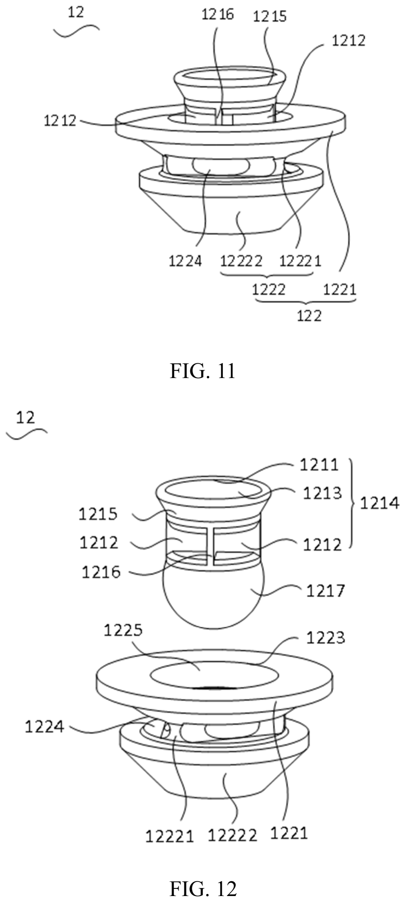

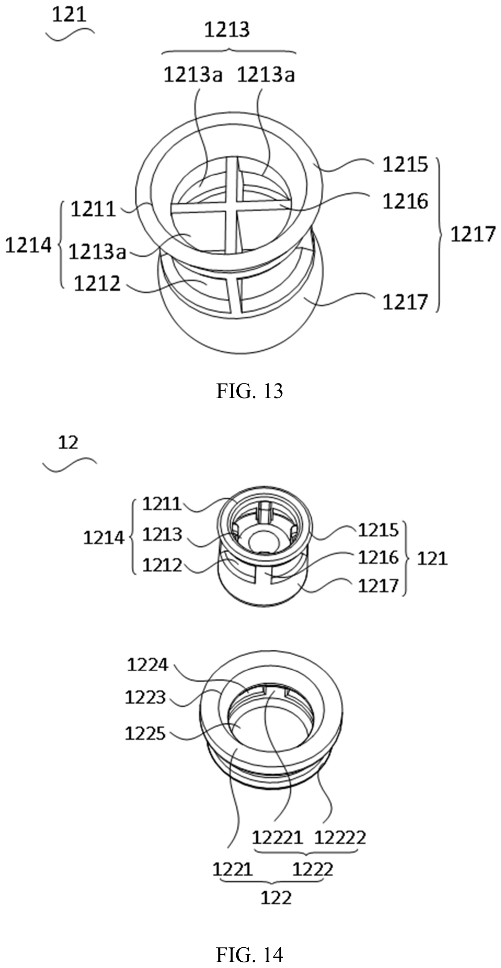

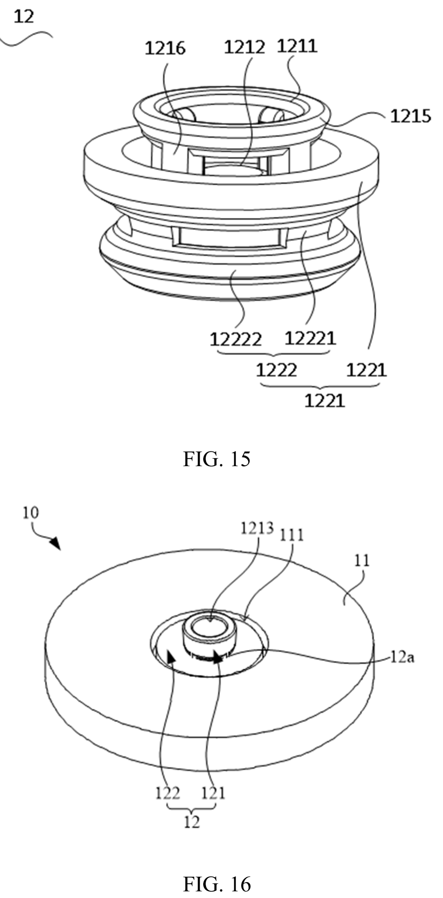

Referring to FIG. 11 to FIG. 15, FIG. 11 is a schematic structural diagram of a check valve 12 in an end cover assembly 10 in a first embodiment, FIG. 12 is an exploded view of the check valve 12 in the end cover assembly 10 in the first embodiment, FIG. 13 is a schematic structural diagram of the valve core 121 of the check valve 12 in the first embodiment, FIG. 14 is an exploded view of a check valve 12 in an end cover assembly 10 in a second embodiment, and FIG. 15 is a schematic structural diagram of the check valve 12 in the end cover assembly 10 in the second embodiment.

In one or more embodiments of the present application, the valve body 122 is provided with a valve cavity 1225 therein, the valve body 122 being provided with a valve port 1223 and a guide port 1224 both in communication with the valve cavity 1225; and the valve core 121 is at least partially disposed within the valve cavity 1225 and the valve core 121 is provided with a flow path structure 1214 therein, the flow path structure 1214 forming the flow passage when in communication with the guide port 1224.

The flow path structure 1214 within the valve core 121 may be one or more, and the guide port 1224 on the valve body 122 may be one or more. Taking the example where there is one flow path structure 1214 within the valve core 121 and one guide port 1224 on the valve body 122, the flow path structure 1214 forms a flow passage when in communication with the guide port 1224. In this embodiment, the check valve 12 has only one flow passage. Taking the example where there is one flow path structure 1214 within the valve core 121 and multiple guide ports 1224 on the valve body 122, the flow path structure 1214 is continuously disposed circumferentially along the valve core 121, and the flow path structure 1214 forms a flow passage with each guide port 1224. In this embodiment, the check valve 12 has multiple flow passages therein, and all flow passages share the same flow path structure 1214. Taking the example where there are multiple flow path structures 1214 within the valve core 121 and one guide port 1224 on the valve body 122, with the guide port 1224 continuously disposed circumferentially along the connecting section 12221, all flow path structures 1214 are circumferentially spaced along the valve core 121, and each flow path structure 1214 forms a flow passage when in communication with the same guide port 1224. In this embodiment, the check valve 12 has multiple flow passages, and all flow passages share the same guide port 1224. Taking the example where there are multiple flow path structures 1214 within the valve core 121 and multiple guide ports 1224 on the valve body 122, all flow path structures 1214 are circumferentially spaced along the valve core 121, the guide ports 1224 are circumferentially spaced along the valve body 122 and correspond one-to-one with all flow path structures 1214, and each flow path structure 1214 forms a flow passage with the corresponding guide port 1224. In this embodiment, the check valve 12 has multiple flow passages, and each flow passage is independent of the other flow passages.

When the valve core 121 is not subjected to an external force, the valve core 121 is at least partially located within the valve cavity 1225, and the valve core 121 is in sealing engagement with the cavity wall of the valve cavity 1225 to enhance the sealing performance of the check valve 12. When the valve core 121 is subjected to an external force, the valve core 121 sinks and drives the sealing section 12222 to separate from the end cover 11 and form a flow port. In addition, the valve core 121 moves relative to the fixing portion 1221 until the flow path structure 1214 communicates with the guide port 1224 to form the flow passage. In this design, when the valve core 121 is not subjected to an external force, the flow path structure 1214 and the guide port 1224 are not in communication, so that no flow passage is formed. The check valve 12 itself has high sealing performance, with excellent sealing properties.

Further, in one or more embodiments of the present application, the valve core 121 is provided with a valve core cavity 1213 therein, and the valve core 121 is provided with a flow path port 1212 and a valve core port 1211 both in communication with the valve core cavity 1213; where the valve core port 1211, the valve core cavity 1213, and the flow path port 1212 are sequentially in communication and are arranged to form the flow path structure 1214.

The valve core 121 includes a first valve core segment 1215, a second valve core segment 1216, and a third valve core segment 1217, the first valve core segment 1215, the second valve core segment 1216, and the third valve core segment 1217 being sequentially disposed along the thickness direction X of the end cover 11, and the second valve core segment 1216 being connected between the first valve core segment 1215 and the third valve core segment 1217.

The first valve core segment 1215 is annular, and an end face of the first valve core segment 1215 away from the third valve core segment 1217 is provided with the valve core port 1211. The first valve core segment 1215, the second valve core segment 1216, and the third valve core segment 1217 define the valve core cavity 1213, and the guide port 1224 is defined by the second valve core segment 1216.

In some embodiments, the second valve core segment 1216 may be a continuous annular structure provided with one or more flow path ports 1212 circumferentially spaced along the valve core 121. In some embodiments, the second valve core segment 1216 includes a plurality of segments circumferentially spaced along the valve core 121, with every two adjacent second valve core segments 1216 defining a flow path port 1212. Each second valve core segment 1216 extends along the thickness direction X of the end cover 11.

In such embodiments, the valve core 121 is independently provided with a flow path structure 1214, and only a guide port 1224 needs to be provided on the valve body 122 to allow the flow path structure 1214 to form the flow passage when in communication with the guide port 1224. This configuration facilitates simplification of the structure of the valve body 122 and the valve core 121, reducing the manufacturing cost of the check valve 12.

Further, in one or more embodiments of the present application, the valve core 121 includes a first valve core segment 1215, a second valve core segment 1216, and a third valve core segment 1217, the second valve core segment 1216 being connected between the first valve core segment 1215 and the third valve core segment 1217; and
referring again to FIG. 13, the second valve core segment 1216 includes at least two segments intersecting within the valve core cavity 1213 to divide the valve core cavity 1213 into a plurality of valve core sub-cavities 1213a, the valve core port 1211 and the valve core sub-cavities 1213a being in communication to form the flow path structure 1214.

In this embodiment, the flow path structures 1214 share the same valve port 1223.

Designing the second valve core segment 1216 to divide the valve core cavity 1213 into multiple valve core sub-cavities 1213a is simple and easy to implement, facilitating the formation of the flow path structure 1214.

Referring again to FIG. 14 and FIG. 15, in one or more embodiments of the present application, the valve core 121 includes a first valve core segment 1215, a second valve core segment 1216, and a third valve core segment 1217, the second valve core segment 1216 being connected between the first valve core segment 1215 and the third valve core segment 1217; and the second valve core segment 1216 includes at least two segments circumferentially spaced around the valve core 121.

In some examples, the second valve core segment 1216 extends along the thickness direction X of the end cover 11, and every two adjacent second valve core segments 1216 define a guide port 1224. In this embodiment, the valve core port 1211, the valve core cavity 1213, and each guide port 1224 are sequentially in communication to form a flow path structure 1214, and the check valve 12 has multiple flow path structures 1214, with all flow path structures 1214 sharing the valve core port 1211 and the valve core cavity 1213.

This design facilitates simplification of the valve core 121 structure, reducing the manufacturing cost of the check valve 12.

Referring to FIG. 16, in one or more embodiments of the present application, an outer surface of the valve core 121 includes a pressing surface 12a, the pressing surface 12a abutting at least a portion of an inner wall of the fixing portion 1221 and the pressing surface 12a being configured to increase an abutting force on the inner wall of the fixing portion 1221 when moving along a driving direction of the valve core 121 for driving the sealing portion 1222.

The pressing surface 12a refers to a surface of the valve core 121 that can abut at least a portion of the inner wall of the valve body 122 when the valve core 121 is at least partially fitted within the valve body 122. During valve opening, when the sealing portion 1222 is compressed and deformed, it exerts a pulling force on the fixing portion 1221 toward the interior of the battery cell 100, which can easily cause the fixing portion 1221 to collapse inward due to the pulling force, leading to structural instability of the check valve 12 on the end cover 11.

To address this, the structure of the pressing surface 12a of the valve core 121 is optimized. During the valve opening process, when the valve core 121 presses the sealing portion 1222 downward to cause deformation of the sealing portion 1222, the abutting force of the pressing surface 12a on the fixing portion 1221 gradually increases, causing the fixing portion 1221 to deform in a direction away from its interior, offsetting or partially offsetting the inward collapse deformation, thereby making the structure of the fixing portion 1221 more stable and enhancing the overall structural stability of the check valve 12.

The pressing surface 12a may have various structural designs, such as an annular curved surface, an inclined plane, and the like, as long as it can gradually increase the abutting force on the inner wall of the fixing portion 1221 during the process of the valve core 121 driving the sealing portion 1222 to deform. The driving direction refers to the direction in which the valve core 121 drives the sealing portion 1222 to deform during the valve opening process, which can also be understood as the direction along the thickness direction X of the end cover 11 toward the side of the sealing portion 1222.

Specifically, in some embodiments, the valve core 121 includes a first valve core segment 1215, a second valve core segment 1216, and a third valve core segment 1217, the second valve core segment 1216 being connected between the first valve core segment 1215 and the third valve core segment 1217. In this case, the pressing surface 12a may be a surface of the second valve core segment 1216 facing the valve body 122, or a surface of the first valve core segment 1215 facing the valve body 122, such as an annular curved surface; certainly, the pressing surface 12a may also be a surface formed collectively by a surface of the second valve core segment 1216 facing the valve body 122 and a surface of the first valve core segment 1215 facing the valve body 122.

By such a design, optimizing the structure of the pressing surface 12a of the valve core 121, during the valve opening process, the abutting force of the pressing surface 12a on the fixing portion 1221 gradually increases, causing the fixing portion 1221 to deform in a direction away from its interior, offsetting or partially offsetting the inward collapse deformation, enhancing the overall structural stability of the check valve 12.

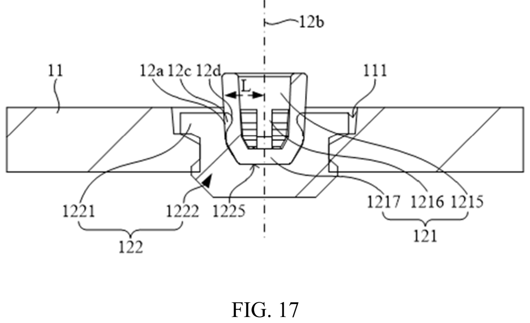

Referring to FIG. 17, in one or more embodiments of the present application, the valve core 121 has a reference line 12b therein extending along a thickness direction X of the end cover 11, a distance L between the pressing surface 12a and the reference line 12b gradually increasing in a direction opposite to the driving direction.

The reference line 12b refers to a line passing through the interior of the valve core 121 and extending along the thickness direction X, which may be the axis of the valve core 121, the centerline of the valve core 121, or another line within the valve core 121.

The distance L between the pressing surface 12a and the reference line 12b gradually increasing in the direction opposite to the driving direction means that the distance L increases from the end of the pressing surface 12a close to the sealing portion 1222 to the end of the pressing surface 12a away from the sealing portion 1222.

It should be noted that when the distance L gradually increases in the direction opposite to the driving direction, during the process of the pressing surface 12a driving the sealing portion 1222 to deform, the outward pressing force on the fixing portion 1221 gradually increases, making the connection between the fixing portion 1221 and the end cover 11 tighter. The pressing surface 12a may be designed as an inclined plane or a curved surface bending outward away from the reference line, and the like.

Specifically, in some embodiments, when the pressing surface 12a is an annular curved surface, the cross-sectional area of the pressing surface 12a may gradually increase from the end of the pressing surface 12a close to the sealing portion 1222 to the end of the pressing surface 12a away from the sealing portion 1222.

By such a design, configuring the distance L between the pressing surface 12a and the reference line 12b to gradually increase results in a gradually increasing outward pressing force on the fixing portion 1221, making the connection between the fixing portion 1221 and the end cover 11 tighter, further enhancing structural stability.

Referring to FIG. 17, in one or more embodiments of the present application, the inner wall of the fixing portion 1221 is provided with an abutting protrusion 12c, the abutting protrusion 12c abutting the pressing surface 12a.

The abutting protrusion 12c refers to a structure on the inner wall of the fixing portion 1221 that abuts the pressing surface 12a. The shape of the abutting protrusion 12c may have various designs, such as an annular protrusion structure, a square protrusion, a hemispherical protrusion structure, and the like.

The number of abutting protrusions 12c may be one or more. When there are multiple abutting protrusions 12c, all abutting protrusions 12c may be distributed at intervals around the outer periphery of the valve core 121.

Additionally, providing the abutting protrusion 12c on the inner wall of the fixing portion 1221 can enhance the structure within the fixing portion 1221, reduce the internal space of the fixing portion 1221, enhance structural strength, reduce the likelihood of inward collapse due to valve opening, and enhance structural stability.

Specifically, in some embodiments, the valve body 122 is provided with a valve cavity 1225, and the inner wall of the fixing portion 1221 facing the valve cavity 1225 has the abutting protrusion 12c.

By such a design, introducing the abutting protrusion 12c facilitates the abutment between the valve core 121 and the fixing portion 1221. In addition, adding the abutting protrusion 12c also helps enhance structural strength, further enhancing structural stability.

Referring to FIG. 17, in one or more embodiments of the present application, the abutting protrusion 12c is annularly disposed around an outer periphery of the valve core 121.

In this embodiment, the abutting protrusion 12c presents an annular structure and abuts the pressing surface 12a, so that the fixing portion 1221 can receive a uniform outward abutting force during the valve opening process.

When the abutting protrusion 12c is an annular structure, the number thereof may be one or more. When there are multiple abutting protrusions 12c, the abutting protrusions 12c may be distributed at intervals along the thickness direction X or the driving direction. In addition, in the driving direction, the heights of the abutting protrusions 12c protruding from the inner wall of the fixing portion 1221 may be consistent or inconsistent. For example, the heights of the abutting protrusions 12c protruding from the inner wall of the fixing portion 1221 may gradually increase along the driving direction.

By such a design, configuring the abutting protrusion 12c as an annular structure makes the abutment between the abutting protrusion 12c and the pressing surface 12a more uniform, thereby making the structure of the valve body 122 more stable during the valve opening process.

Referring to FIG. 17, in one or more embodiments of the present application, the abutting protrusion 12c is located at an end of the inner wall of the fixing portion 1221 away from the sealing portion 1222.

The abutting protrusion 12c is disposed at the end away from the sealing portion 1222, so that the abutting force exerted by the pressing surface 12a on the abutting protrusion 12c is transferred to the end of the fixing portion 1221 away from the sealing portion 1222, making it easier for the fixing portion 1221 to abut the end cover 11.

By such a design, it is easier for the abutting protrusion 12c to be subjected to a force and abut the end cover 11, allowing the fixing portion 1221 to better abut the end cover 11, thereby enhancing structural stability.

Referring to FIG. 17, in one or more embodiments of the present application, a side of the abutting protrusion 12c facing the valve core 121 includes an abutting surface 12d, the abutting surface 12d being configured as an arcuate curved surface protruding toward the valve core 121.

The abutting surface 12d is a curved surface, so that during abutment, the contact between the pressing surface 12a and the abutting surface 12d is a line contact, facilitating the transfer of the abutting force to the fixing portion 1221. In addition, when driving the sealing portion 1222 to deform, the frictional movement of the pressing surface 12a on the abutting surface 12d can be reduced.

Specifically, in some embodiments, one end of the abutting surface 12d is connected to an end face of the fixing portion 1221 away from the sealing portion 1222, for example, one end of the abutting surface 12d is tangentially connected to the end face of the fixing portion 1221 away from the sealing portion 1222.

By such a design, it facilitates the transfer of the abutting force, reduces the likelihood of the fixing portion 1221 collapsing inward, and also reduces the frictional movement of the pressing surface 12a on the abutting surface 12d, minimizing wear on the pressing surface 12a.

Referring again to FIG. 4 to FIG. 7, according to a third aspect, the present application provides an end cover assembly 10, where the end cover assembly 10 includes: an end cover 11 provided with a liquid injection hole 111 penetrating along a thickness direction X thereof; and the check valve 12 according to any one of the preceding embodiments, where the valve body 122 is assembled in the liquid injection hole 111.

The end cover assembly 10 provided in the present application has the effects brought by any one of the preceding embodiments, and thus is not repeated here.

Referring again to FIG. 4 to FIG. 7, according to a third aspect, the present application provides an end cover assembly 10, where the end cover assembly 10 includes: an end cover 11 and a valve body 122, the end cover 11 being provided with a liquid injection hole 111 penetrating along a thickness direction X thereof. The valve body 122 is assembled in the liquid injection hole 111 and includes a fixing portion 1221 and a sealing portion 1222, the fixing portion 1221 being connected to the end cover 11, the sealing portion 1222 being connected to the fixing portion 1221 and in sealing engagement with the end cover 11, and the valve body 122 being configured to define, with a valve core 121, a flow passage for communication with an external environment. Where, the sealing portion 1222 is configured to deform under an external force and separate from the end cover 11 to form a flow port, the flow port being in communication with the flow passage.

Referring again to FIG. 6 to FIG. 8, the fixing portion 1221 is fixed to the end cover 11, and regardless of whether an external force is applied to the valve core 121, the position of the fixing portion 1221 relative to the end cover 11 remains unchanged. The fixing portion 1221 may be located within the liquid injection hole 111 and retained with the wall of the liquid injection hole 111; alternatively, the fixing portion 1221 may be located on the side of the end cover 11 facing away from the interior of the casing 20 and abut the outer end face 113 of the end cover 11.

The sealing portion 1222 is an elastic component, such as a rubber material, which, under the action of an external force, deforms by contracting, stretching, or the like to separate from the end cover 11 and form a flow port. When the external force is removed, the sealing portion 1222 automatically recovers its deformation and re-establishes sealing engagement with the end cover 11. It should be noted that when the external force is removed, there is a certain pre-pressure between the sealing portion 1222 and the end cover 11, so that the rebound force of the sealing portion 1222 provides a sealing force, enhancing the sealing effect on the liquid injection hole 111.

For example, the sealing portion 1222 may achieve sealing engagement with the end cover 11 by abutting the wall of the liquid injection hole 111; in such embodiments, the sealing portion 1222 separates from the wall of the liquid injection hole 111 to form the flow port; and/or, the sealing portion 1222 may be accommodated in the internal environment of the battery cell 100 and abut the inner end face 112 of the end cover 11 to achieve sealing engagement with the end cover 11; in such embodiments, the sealing portion 1222 separates from the inner end face 112 of the end cover 11 to form the flow port.

It is worth mentioning that the sealing portion 1222 and the fixing portion 1221 in this embodiment may be the sealing portion 1222 and the fixing portion 1221 in any one of the preceding embodiments, and thus are not repeated here. Meanwhile, when opening the liquid injection hole 111, an external force is applied to the sealing portion 1222 to cause deformation, separating it from the end cover 11 to form a flow port. There may be various ways to apply the force to the sealing portion 1222, for example, using the valve core 121 in any one of the preceding embodiments, where the valve core 121 is at least partially fitted with the sealing portion 1222 and drives the sealing portion 1222 to deform toward the interior of the battery cell 100. The valve core 121 and the sealing portion 1222 may be detachably fitted, so that after exhaust or liquid injection is completed, the valve core 121 can be removed from the valve body 122. In this case, the end cover assembly 10 in this embodiment does not include the valve core 121.

By such a design, providing the check valve 12 at the liquid injection hole 111 of the end cover 11 can effectively reduce the impact of the external environment on the internal environment of the battery cell 100 during the battery 1000 production process, improving the waterproofing effect and liquid injection efficiency of the battery cell 100.

Referring again to FIG. 3, according to a fourth aspect, the present application provides a battery cell 100, including a casing 20 and an end cover assembly 10, the casing 20 having an opening at one end, and the end cover 11 of the end cover assembly 10 being disposed to cover the opening of the casing 20 and the flow port being in communication between the flow passage and an interior of the casing 20.

The battery cell 100 provided in the present application has the effects brought by any one of the preceding embodiments, and thus is not repeated here.

Referring again to FIG. 2, according to a fifth aspect, the present application provides a battery 1000 including the battery cell 100 according to any one of the preceding embodiments.

The battery 1000 provided in the present application has the effects brought by any one of the preceding embodiments, and thus is not repeated here.

Referring again to FIG. 1, according to a sixth aspect, the present application provides an electric apparatus including the battery 1000 according to any one of the preceding embodiments, the battery 1000 being configured to provide electrical energy to the electric apparatus.

The electric apparatus provided in the present application has the effects brought by any one of the preceding embodiments, and thus is not repeated here.

As described in FIG. 3 to FIG. 9, according to one or more embodiments of the present application, the present application provides an end cover assembly 10, the end cover assembly 10 including an end cover 11 and a check valve 12, the end cover 11 being provided with a liquid injection hole 111 penetrating along a thickness direction X thereof, the check valve 12 including a valve core 121 and a valve body 122, the valve body 122 being assembled in the liquid injection hole 111 and including a fixing portion 1221 and a sealing portion 1222, the fixing portion 1221 being connected to the end cover 11, the sealing portion 1222 being connected to the fixing portion 1221 and in sealing engagement with the end cover 11, the valve core 121 being at least partially fitted within the valve body 122 and defining, with the valve body 122, a flow passage for communication with an external environment; where the valve core 121 is configured to drive, under an external force, the sealing portion 1222 to stretch along the thickness direction X of the end cover 11 to separate from the end cover 11 and form a flow port, where the flow port is in communication with the flow passage.

It can be seen that, in the present application, when the valve core 121 is not subjected to an external force, the sealing portion 1222 is in sealing engagement with the end cover 11 and blocks the flow passage from the internal environment of the battery cell 100. In this way, no medium exchange can occur between the external environment and the internal environment of the battery cell 100, meaning neither exhaust nor liquid injection can take place, and the internal environment of the battery cell 100 is minimally affected by the external environment, providing good waterproofing. Consequently, there is no need to evacuate the battery cell 100 during the subsequent liquid injection process, resulting in high liquid injection efficiency. When the valve core 121 is subjected to an external force, the sealing portion 1222 separates from the end cover 11 and forms a flow port, the flow port being in communication with the flow passage. Therefore, water vapor formed by the evaporation of moisture within the electrode assembly 30 can be discharged to the external environment through the flow port and the flow passage to achieve exhaust. Additionally, the electrolyte can flow into the internal environment of the battery cell 100 through the flow passage and the flow port to achieve liquid injection. Thus, by providing the check valve 12 at the liquid injection hole 111 of the end cover 11, the impact of the external environment on the internal environment of the battery cell 100 during the battery 1000 production process can be effectively reduced, improving the waterproofing effect and liquid injection efficiency of the battery cell 100.

By configuring the valve core 121 to be connected to the sealing portion 1222 and to drive the sealing portion 1222 to stretch along the thickness direction X of the end cover 11 under an external force to separate from the end cover 11 and form a flow port, a simple operation is achieved, which facilitates simplification of the structure of the check valve 12, significantly reducing the manufacturing cost of the check valve 12. When the external force is removed, the sealing portion 1222 recovers its deformation, and the sealing portion 1222 re-establishes sealing engagement with the end cover 11. During this process, residual electrolyte in the valve core 121 flows into the internal environment of the battery cell 100 through the flow passage, helping to reduce the impact of electrolyte crystallization or moisture absorption within the valve core 121 on the performance of the battery cell 100.

The technical features of the above embodiments can be arbitrarily combined. For brevity, not all possible combinations of the technical features in the above embodiments are described. However, as long as there is no contradiction in the combination of these technical features, they should be considered within the scope of this specification.

The above embodiments only express several implementation manners of the present application, and the descriptions are specific and detailed but should not be understood as limiting the scope of the patent application. It should be noted that, for those of ordinary skill in the art, several variations and improvements can be made without departing from the concept of the present application, and these fall within the protection scope of the present application. Therefore, the protection scope of the patent of the present application should be subject to the appended claims.

## Claims

1. A check valve configured to seal or open a liquid injection hole (111) of an end cover (11), the check valve comprising:
a valve core (121); and
a valve body (122) assembled in the liquid injection hole (111) and comprising a fixing portion (1221) and a sealing portion (1222), the fixing portion (1221) being connected to the end cover (11), the sealing portion (1222) being connected to the fixing portion (1221) and in sealing engagement with the end cover (11), and the valve core (121) being at least partially fitted within the valve body (122) and defining, with the valve body (122), a flow passage for communication with an external environment; wherein
the valve core (121) is capable of driving, under an external force, the sealing portion (1222) to deform and separate from the end cover (11) and form a flow port, wherein the flow port is in communication with the flow passage.

2. The check valve according to claim 1, wherein the valve core (121) is connected to the sealing portion (1222) and is capable of driving, under an external force, the sealing portion (1222) to stretch along a thickness direction (X) of the end cover (11) to separate from the end cover (11) and form the flow port.

3. The check valve according to claim 2, wherein the sealing portion (1222) and the fixing portion (1221) are both elastic structures and integrally formed.

4. The check valve according to any one of claims 1 to 3, wherein the sealing portion (1222) comprises a connecting section (12221) and a sealing section (12222), the connecting section (12221) being connected between the fixing portion (1221) and the sealing section (12222); and
the fixing portion (1221) and the sealing section (12222) are both in sealing engagement with the end cover (11).

5. The check valve according to claim 4, wherein surfaces of the fixing portion (1221), the connecting section (12221), and the sealing section (12222) facing away from the valve core (121) enclose a bayonet (123), the end cover (11) being clamped within the bayonet (123).

6. The check valve according to any one of claims 1 to 5, wherein the valve core (121) and the valve body (122) define a plurality of flow passages, and openings of the flow passages, which communicate with the flow port, are circumferentially spaced along the valve body (122).

7. The check valve according to any one of claims 1 to 6, wherein the valve body (122) is provided with a valve cavity (1225) therein, the valve body (122) being provided with a valve port (1223) and a guide port (1224) both in communication with the valve cavity (1225); and the valve core (121) is at least partially disposed within the valve cavity (1225) and encloses, with a cavity wall of the valve cavity (1225), a flow cavity (1226), wherein the valve port (1223), the flow cavity (1226), and the guide port (1224) are sequentially in communication to form the flow passage.

8. The check valve according to any one of claims 1 to 6, wherein the valve body (122) is provided with a valve cavity (1225) therein, the valve body (122) being provided with a valve port (1223) and a guide port (1224) both in communication with the valve cavity (1225); and the valve core (121) is at least partially disposed within the valve cavity (1225) and the valve core (121) is provided with a flow path structure (1214) therein, the flow path structure (1214) forming the flow passage when in communication with the guide port (1224).

9. The check valve according to claim 8, wherein the valve core (121) is provided with a valve core cavity (1213) therein and the valve core (121) is provided with a flow path port (1212) and a valve core port (1211) both in communication with the valve core cavity (1213); wherein the valve core port (1211), the valve core cavity (1213), and the flow path port (1212) are sequentially in communication and are arranged to form the flow path structure (1214).

10. The check valve according to claim 9, wherein the valve core (121) comprises a first valve core segment (1215), a second valve core segment (1216), and a third valve core segment (1217), the second valve core segment (1216) being connected between the first valve core segment (1215) and the third valve core segment (1217); and
the second valve core segment (1216) comprises at least two segments intersecting within the valve core cavity (1213) to divide the valve core cavity (1213) into a plurality of valve core sub-cavities (1213a), the valve core port (1211) and the valve core sub-cavities (1213a) being in communication to form the flow path structure (1214).

11. The check valve according to claim 9, wherein the valve core (121) comprises a first valve core segment (1215), a second valve core segment (1216), and a third valve core segment (1217), the second valve core segment (1216) being connected between the first valve core segment (1215) and the third valve core segment (1217); and
the second valve core segment (1216) comprises at least two segments circumferentially spaced around the valve core (121).

12. The check valve according to any one of claims 1 to 11, wherein an outer surface of the valve core (121) comprises a pressing surface (12a), the pressing surface (12a) abutting at least a portion of an inner wall of the fixing portion (1221) and the pressing surface (12a) being configured to increase an abutting force on the inner wall of the fixing portion (1221) when moving along a driving direction of the valve core (121) for driving the sealing portion (1222).

13. The check valve according to claim 12, wherein the valve core (121) has a reference line (12b) therein extending along a thickness direction (X) of the end cover (11), a distance (L) between the pressing surface (12a) and the reference line (12b) gradually increasing in a direction opposite to the driving direction.

14. The check valve according to claim 12 or 13, wherein the inner wall of the fixing portion (1221) is provided with an abutting protrusion (12c), the abutting protrusion (12c) abutting the pressing surface (12a).

15. The check valve according to claim 14, wherein the abutting protrusion (12c) is annularly disposed around an outer periphery of the valve core (121).

16. The check valve according to claim 14 or 15, wherein the abutting protrusion (12c) is located at an end of the inner wall of the fixing portion (1221) away from the sealing portion (1222).

17. The check valve according to any one of claims 14 to 16, wherein a side of the abutting protrusion (12c) facing the valve core (121) comprises an abutting surface (12d), the abutting surface (12d) being configured as an arcuate curved surface protruding toward the valve core (121).

18. An end cover assembly comprising:
an end cover (11) provided with a liquid injection hole (111) penetrating along a thickness direction (X) thereof; and
the check valve according to any one of claims 1 to 17, the valve body (122) being assembled in the liquid injection hole (111).

19. An end cover assembly comprising:
an end cover (11) provided with a liquid injection hole (111) penetrating along a thickness direction (X) thereof; and
a valve body (122) assembled in the liquid injection hole (111) and comprising a fixing portion (1221) and a sealing portion (1222), the fixing portion (1221) being connected to the end cover (11), the sealing portion (1222) being connected to the fixing portion (1221) and in sealing engagement with the end cover (11), and the valve body (122) being configured to define, with a valve core (121), a flow passage for communication with an external environment; wherein
the sealing portion (1222) is configured to deform under an external force and separate from the end cover (11) to form a flow port, the flow port being in communication with the flow passage.

20. A battery cell comprising:
a casing (20) having an opening at one end; and
the end cover assembly according to claim 18 or 19, the end cover (11) being disposed to cover the opening of the casing (20) and the flow port being in communication between the flow passage and an interior of the casing (20).

21. A battery comprising the battery cell according to claim 20.

22. An electric apparatus comprising the battery according to claim 21, the battery being configured to provide electrical energy to the electric apparatus.
